# EUROPÄISCHE PATENTSCHRIFT

(11) **EP 4 416 042 B1**
(45) Veröffentlichungstag und Bekanntmachung des Hinweises auf die Patenterteilung: **18.03.2026**
(21) Anmeldenummer: 22789578.6
(22) Anmeldetag: 23.09.2022
(51) Int. Cl.: B62J 9/23, B62J 9/00, A45C 7/00

(54) **BEHÄLTER FÜR EIN EINSPURIGES KRAFTFAHRZEUG**
CONTAINER FOR A SINGLE-TRACK MOTOR VEHICLE
RÉCIPIENT POUR VÉHICULE AUTOMOBILE À VOIE UNIQUE

(30) Priorität: 14.10.2021 DE 102021126618
(43) Veröffentlichungstag der Anmeldung: 21.08.2024
(73) Patentinhaber: Bayerische Motoren Werke Aktiengesellschaft, 80809 München (DE)
(72) Erfinder: VIZER, Cliff, 78087 Mönchweiler (DE); ROWLEY, Ian, 78078 Niedereschach (DE)
(86) Internationale Anmeldenummer: PCT/EP2022/076486
(87) Internationale Veröffentlichungsnummer: WO 2023/061726

(56) Entgegenhaltungen:
- DE-U1- 202020 003 514

## Beschreibung

Die Erfindung betrifft einen Behälter, insbesondere ein Topcase oder ein Sidecase, für ein einspuriges Kraftfahrzeug mit einem ersten Behälterelement und einem zweiten Behälterelement.

Stand der Technik für breitenverstellbare hartschalige Motorradkoffer ist ein Topcase bzw. Sidecase, welches auf einem Zahnradmechanismus basiert. Dieses System ist zweistufig und wird zwischen einem eingefahrenen und einem ausgefahrenen Zustand unterschieden. Durch die Betätigung eines Bügels kann der Koffer vom eingefahrenen in den ausgefahrenen Zustand überführt werden.

Darüber hinaus gibt es breitenverstellbare Systeme für Motorradgepäck, welche beispielsweise aus flexiblem Material, wie Textil oder Leder, bestehen und daher ohne einen Zahnradmechanismus auskommen.

In der EP1566328 ist ein Koffer offenbart, der ein erstes Kofferteil aufweist und ein mit dem ersten Kofferteil verbundenes zweites Kofferteil, das seitlich verschieblich in Bezug auf das erste Kofferteil angeordnet ist, wobei durch Verschieben des zweiten Kofferteils in Bezug auf das erste Kofferteil die Breite und somit das Stauvolumen des Seitenkoffers verstellt werden kann.

Die Druckschrift US6505765 offenbart eine ausdehnbare Satteltasche für ein Motorrad, die zwischen einem zusammengezogenen und einem ausgedehnten Zustand verstellbar ist. Die ausdehnbare Satteltasche umfasst eine Seitenfalte und einen Seitenfalten-Verschlussmechanismus, der von einer geschlossenen Position in eine offene Position bewegt werden kann, um die Tasche zwischen dem zusammengezogenen und dem ausgedehnten Zustand einzustellen.

Ferner offenbart die Druckschrift FR2973329 einen Koffer, welcher ein Entfaltungs- und Verriegelungssystem für die Entfaltung und Verriegelung verschiedener Elemente, z.B. mehrerer Schalen, des Koffers aufweist, bei welchem die Entfaltung der Elemente in Fächerform durch Drehung der Elemente gegeneinander durch ein Ablenkblech erfolgt und die Schalen die Form von Orangenscheiben haben.

Nachteilig an den vorstehend beschriebenen Lösungen ist, dass kein aerodynamisches Design möglich ist, da eine Zahnradmechanik geradlinig verbaut werden muss. Darüber hinaus sind lediglich zwei Zustände möglich, ein eingefahrener und ein ausgefahrener Zustand.

Weiterer druckschriftlicher Stand der Technik im vorliegenden technischen Gebiet ist in dem Dokument DE 20 2020 003 514 U1, das alle Merkmale des Oberbegriffs des unabhängigen Anspruchs 1 zeigt, offenbart.

Es ist daher Aufgabe der vorliegenden Erfindung, einen Behälter für ein einspuriges Kraftfahrzeug bereitzustellen, welcher ein zwischen zwei Positionen stufenlos verstellbares Volumen aufweist und dabei ein aerodynamisches Design ermöglicht.

Diese Aufgabe wird durch die Merkmalskombination gemäß Patentanspruch 1 gelöst.

Erfindungsgemäß wird ein Behälter, insbesondere ein Topcase oder ein Sidecase, für ein einspuriges Kraftfahrzeug mit einem ersten Behälterelement und einem zweiten Behälterelement vorgeschlagen. Das erste Behälterelement und das zweite Behälterelement sind insbesondere ein Hartschalenelement. Ferner ist das erste Behälterelement an dem einspurigen Kraftfahrzeug befestigbar und das zweite Behälterelement weist eine/n Öffnung/Deckel für ein Gepäckstück auf. Darüber hinaus sind das erste Behälterelement und das zweite Behälterelement derart einander überlappend angeordnet, dass das zweite Behälterelement zwischen einer ersten eingeschobenen Position und einer zweiten ausgefahrenen Position an dem ersten Behälterelement verschiebbar und ein Volumen des Behälters veränderbar ist. Ferner ist an einer Innenseite des ersten Behälterelements und einer Innenseite des zweiten Behälterelements ein Spindelsystem angeordnet. Dabei ist das zweite Behälterelement mittels des Spindelsystems stufenlos zwischen der ersten eingeschobenen Position und der zweiten ausgefahrenen Position verschiebbar und/oder fixierbar.

Auf diese Weise ist ein vorzugsweise hartschaliger zweiteiliger Motorradbehälter mit einem möglichen aerodynamischem Design bereitgestellt, welcher eine stufenlosen Breitenverstellung ermöglicht.

Erfindungsgemäß weist das Spindelsystem zumindest einen endlosen Zahnriemen, zumindest eine Spindel, zumindest eine Spindelmutter, zumindest ein Zahnriemenrad und ein Betätigungselement für den Zahnriemen auf. Durch diese Komponenten ist das Spindelsystem umgesetzt.

In einer bevorzugten Ausführungsform der Erfindung ist ein Ende der zumindest einen Spindel an dem zweiten Behälterelement rotatorisch fixiert und das andere Ende der Spindel ist freistehend. Die zumindest eine Spindel ist in der zumindest einen Spindelmutter gelagert. Dabei ist die zumindest eine Spindelmutter rotierbar an dem ersten Behälterelement gelagert und mit dem zumindest einen Zahnriemenrad verbunden. Vorzugsweise ist die zumindest eine Spindelmutter in das zumindest eine Zahnriemenrad integriert.

Dementsprechend ist das eine Ende der Spindel dabei am verstellbaren Behälterelement befestigt ist, wobei die Spindel rotatorisch fixiert ist, welcher wiederum an der Decke des Behälters befestigt ist. Das andere Ende der Spindel ist freistehend. Denkbar ist auch ein gegenläufiger Aufbau. Die Spindel ist durch die Spindelmutter geführt. Im eingeschobenen Zustand befindet sich ein Ende der Spindel auf kleinstmöglicher Distanz zur Spindelmutter, das andere Ende der Spindel ist hingegen auf maximaler Distanz. Die Spindelmutter befindet sich im Inneren eines Zahnriemenrads und ist dort fixiert. Eine Drehung des Zahnriemenrads führt dazu, dass die Spindel aus der Mutter herausgeschoben wird und sich ein Ende der Spindel dem Zahnriemenrad annähert. Die Drehbewegung wird in eine Verschiebebewegung bzw. in eine Verschiebekraft umgewandelt. Die Spindel drückt gegen das verstellbare Behälterelement, was ein Verschieben der beiden Behälterelemente relativ zueinander ermöglicht. Demzufolge wir der Behälter vergrößert. Eine Drehung des Zahnriemenrads in die entgegengesetzte Richtung führt dazu, dass die Spindel wieder in die Mutter hineingezogen wird und sich das Volumen des Behälters verkleinert.

In einer alternativen Ausführung des vorliegenden Behälters ist vorgesehen, dass die zumindest eine Spindelmutter an dem zweiten Behälterelement rotatorisch fixiert ist, wobei die zumindest eine Spindel in der zumindest einen Spindelmutter gelagert ist. Ferner ist ein Ende der zumindest einen Spindel mit dem zumindest einen Zahnriemenrad verbunden und das andere Ende der Spindel ist freistehend. Die Spindel ist rotierbar an dem ersten Behälterelement gelagert. Vorzugsweise ist das zumindest eine Zahnriemenrad in die zumindest eine Spindel integriert. Vorteilhaft daran ist, dass die Spindelmutter am verstellbaren Behälterelement und die Spindel im Inneren des Zahnriemenrads befestigt ist. Eine Drehung des Zahnriemenrads führt dann dazu, dass sich die Spindel selbst in die Mutter zieht oder sich herausdreht.

In einem Ausführungsbeispiel der Erfindung ist vorgesehen, dass das Spindelsystem eine Vielzahl von Spindeln mit jeweils einer Spindelmutter und einem Zahnriemenrad aufweist. Dabei ist günstig, dass aufgrund der Vielzahl von Spindeln, welche durch einen Zahnriemen synchron angetrieben werden, eine lineare Verschiebung der Behälterelemente zueinander ermöglicht ist.

Nicht erfindungsgemäß ist der Behälter derart ausgebildet, dass ein endloser Zahnriemen vorgesehen ist, welcher sich an der Innenseite des ersten Behälterelements umlaufend erstreckt. Auf diese Weise verläuft der Zahnriemen entlang der Innenseite des ersten Behälters und steht mit sämtlichen Zahnriemenräder in Kontakt, wodurch die lineare Verschiebung der Behälterelemente zueinander ermöglicht ist.

Erfindungsgemäß ist vorgesehen, dass das Spindelsystem zumindest drei endlose Zahnriemen umfasst, welche im Wesentlichen u-förmig angeordnet sind. Dabei erstrecken sich an einem jeweiligen Übergang von einem Zahnriemen zu einem weiteren Zahnriemen jeweils die entsprechenden Zahnriemen um ein Zahnriemenrad. Vorzugsweise ist eine Trennscheibe an dem Zahnriemenrad zwischen den jeweiligen Zahnriemen angeordnet. Dadurch ist eine Behältervariante umgesetzt, bei welcher nicht ausreichend Platz für einen endlosen, die Kontur des Behälterinneren umlaufenden Zahnriemen aufweist.

Der erfindungsgemäße Behälter ist in einer Ausführungsvariante ausgebildet, dass das Betätigungselement ein Drehknauf mit einem Zahnriemenrad, ein von einem Motor angetriebenes Zahnriemenrad oder ein Hebel zum Verschieben des zumindest einen endlosen Zahnriemens ist. Diese Komponenten sind besonders für ein Betätigungselement eines Zahnriemens geeignet.

Weiter vorteilhaft ist es, wenn das Betätigungselement einen Teleskopstab umfasst, welcher den Drehknauf mit dem Zahnriemenrad verbindet. Dabei ist der Teleskopstab in dem Zahnriemenrad entlang einer Rotationsachse des Zahnriemenrads verschiebbar gelagert. Dadurch lässt sich der Drehknauf für eine bessere Handhabung herausziehen.

Der erfindungsgemäße Behälter ist in einer bevorzugten Ausführungsform ausgebildet, dass das Spindelsystem mittels einer Blende verdeckt ist. Vorteilhaft daran ist, dass das Spindelsystem im Inneren des Behälters nicht sichtbar ist, wodurch der Behälter für den Fahrer optisch ansprechender ist.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1a, b: eine perspektivische Ansicht eines Behälters für ein einspuriges Kraftfahrzeug;
- Fig. 2: eine Schnittansicht eines Behälters für ein einspuriges Kraftfahrzeug;
- Fig. 3: eine perspektivische Ansicht eines weiteren Behälters für ein einspuriges Kraftfahrzeug und
- Fig. 4: eine Schnittansicht eines weiteren Behälters für ein einspuriges Kraftfahrzeug.

Die Figuren sind beispielhaft schematisch. Gleiche Bezugszeichen in den Figuren weisen auf gleiche funktionale und/oder strukturelle Merkmale hin.

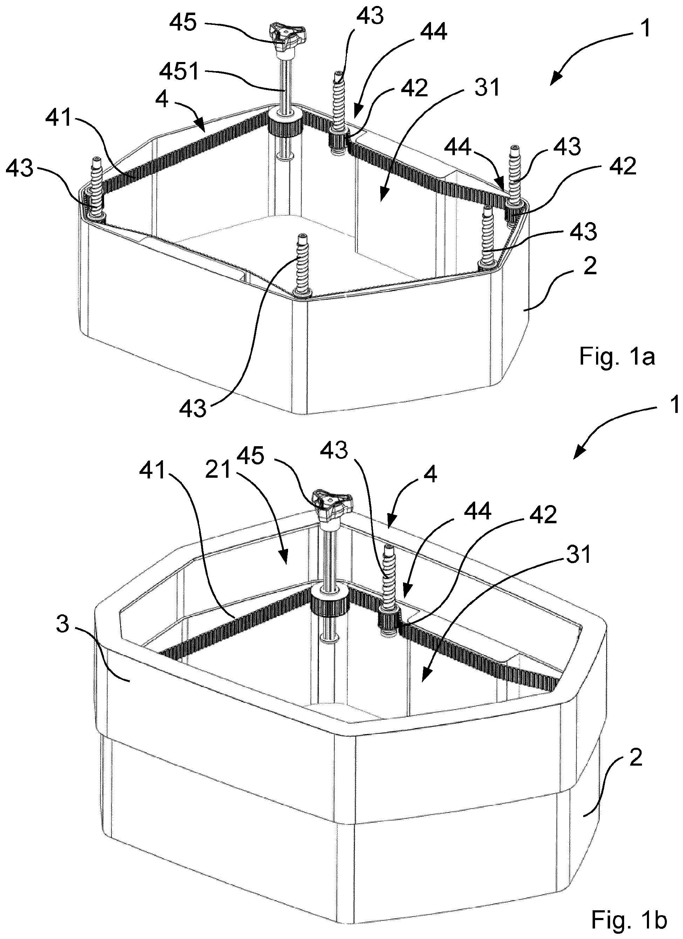

In Figur 1a bzw. 1b ist eine perspektivische Ansicht eines Behälters 1 für ein einspuriges Kraftfahrzeug dargestellt. Der Behälter 1 ist als ein Sidecase für ein einspuriges Kraftfahrzeug mit einem ersten Behälterelement 2 und einem zweiten Behälterelement 3 ausgeführt. Ferner sind das erste Behälterelement 2 und das zweite Behälterelement 3 ein Hartschalenelement. Dabei ist das erste Behälterelement 2 an dem einspurigen Kraftfahrzeug befestigbar ist und das zweite Behälterelement 3 weist eine nicht dargestellte Öffnung für ein Gepäckstück auf.

Ferner sind das erste Behälterelement 2 und das zweite Behälterelement 3 derart einander überlappend angeordnet, dass das zweite Behälterelement 3 zwischen einer ersten eingeschobenen Position und einer zweiten ausgefahrenen Position an dem ersten Behälterelement 2 verschiebbar und ein Volumen des Behälters 1 veränderbar ist. In Figur 1a bzw. b befindet sich das zweite Behälterelement 3 in der zweiten ausgefahrenen Position.

An einer Innenseite 21 des ersten Behälterelements 2 und einer Innenseite 31 des zweiten Behälterelements 3 ist ein Spindelsystem 4 angeordnet. Das Spindelsystem 4 umfasst einen endlosen Zahnriemen 41, welcher sich an der Innenseite 21 des ersten Behälterelements 2 umlaufend erstreckt. Darüber hinaus weist das Spindelsystem 4 fünf Spindeln 43, fünf Spindelmuttern 44, fünf Zahnriemenräder 42 und ein Betätigungselement 45 für den Zahnriemen 41 auf.

Das zweite Behälterelement 3 ist mittels des Spindelsystems 4 stufenlos zwischen der ersten eingeschobenen Position und der zweiten ausgefahrenen Position verschiebbar und fixierbar.

Hierfür ist ein Ende der jeweiligen Spindel 43 an dem zweiten Behälterelement 3 rotatorisch fixiert und das andere Ende der jeweiligen Spindel 43 ist freistehend. Ferner ist die jeweilige eine Spindel 43 in der jeweiligen Spindelmutter 44 gelagert. Außerdem ist die jeweilige Spindelmutter 44 rotierbar an dem ersten Behälterelement 2 gelagert ist und in das jeweilige Zahnriemenrad 42 integriert.

Darüber hinaus ist das Betätigungselement 45 ein Drehknauf mit einem Zahnriemenrad 42 und umfasst einen Teleskopstab 451, welcher den Drehknauf mit dem Zahnriemenrad 42 verbindet. Der Teleskopstab 451 ist in dem Zahnriemenrad 42 entlang einer Rotationsachse des Zahnriemenrads 42 verschiebbar gelagert.

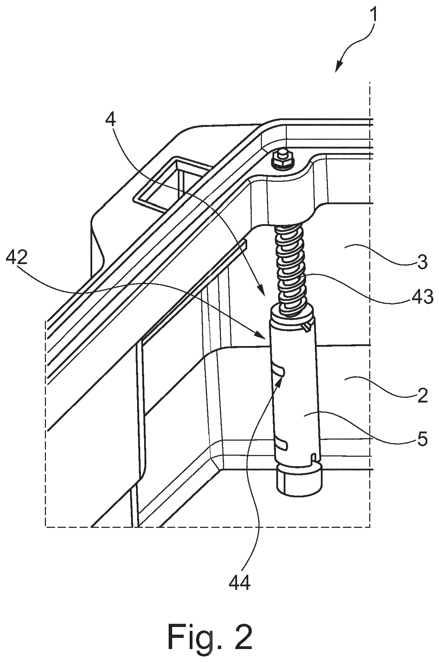

Figur 2 zeigt eine Schnittansicht des in Figur 1 dargestellten Behälters 1 für ein einspuriges Kraftfahrzeug. Dabei ist eine Spindel 43, ein Zahnriemenrad 42 und eine darin integrierte Spindelmutter 44 des Spindelsystems 4 dargestellt, welches an der Innenseite 21, 31 des ersten und zweiten Behälterelements 2, 3 angeordnet ist. Ferner ist das Spindelsystem 4 mittels einer Blende 5 verdeckt.

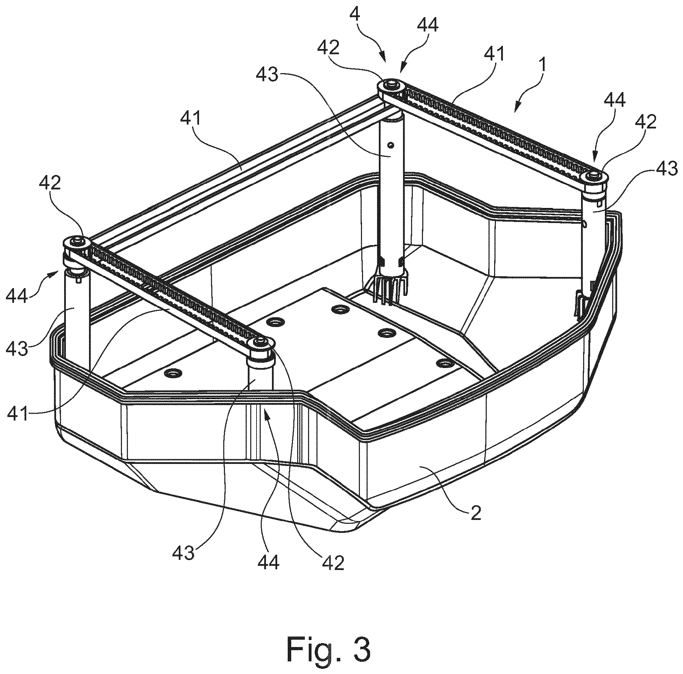

In Figur 3 ist eine perspektivische Ansicht eines erfindungsgemäßen weiteren Behälters 1 für ein einspuriges Kraftfahrzeug gezeigt. Nachdem dieser Behälter 1 im Wesentlichen die gleichen Merkmale aufweist wie der in Figur 1 dargestellte Behälter 1, wird im Folgenden lediglich auf unterschiedliche Merkmale eingegangen. Der Behälter 1 ist ein Topcase für ein einspuriges Kraftfahrzeug. Das Spindelsystem 4 umfasst drei endlose Zahnriemen 41, welche im Wesentlichen u-förmig angeordnet sind. An einem jeweiligen Übergang von einem Zahnriemen 41 zu einem weiteren Zahnriemen 41 erstrecken sich jeweils beide Zahnriemen 41 um ein Zahnriemenrad 42. Ferner ist eine Trennscheibe 421 an dem Zahnriemenrad 42 zwischen den beiden Zahnriemen 41 angeordnet.

Außerdem sind vier Spindeln 43, vier Spindelmuttern 44, vier Zahnriemenräder 42 und ein Betätigungselement 45 (nicht dargestellt) für einen der Zahnriemen 41 an dem ersten Behälterelement 2 angeordnet. Des Weiteren ist die jeweilige Spindelmutter 44 an dem zweiten Behälterelement 3, welche nicht in Figur 3 gezeigt ist, rotatorisch fixiert. Die jeweilige Spindel 43 ist in der jeweiligen einen Spindelmutter 44 gelagert. Dabei ist das jeweilige Zahnriemenrad 42 in ein Ende der jeweiligen Spindel 43 integriert. Das andere Ende der Spindel 43 ist freistehend. Ferner ist die jeweilige Spindel 44 rotierbar an dem ersten Behälterelement 2 gelagert.

Das Betätigungselement 45 ein Drehknauf mit einem Zahnriemenrad 42 und das Spindelsystem 4 ist mittels einer Blende 5 verdeckt.

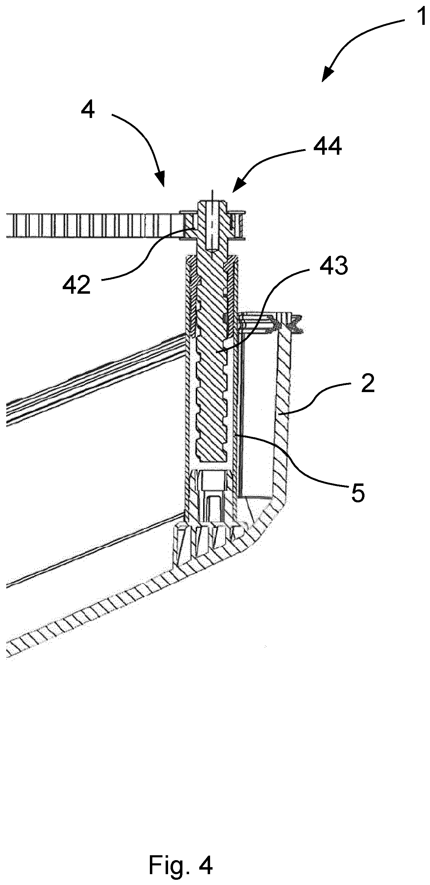

Figur 4 zeigt eine Schnittansicht des in Figur 3 dargestellten Behälters 1 für ein einspuriges Kraftfahrzeug. Dabei ist eine Spindel 43, ein Zahnriemenrad 42 und eine darin integrierte Spindelmutter 44 des Spindelsystems 4 dargestellt, welches an der Innenseite 21 des ersten Behälterelements 2 angeordnet ist. Ferner ist das Spindelsystem 4 mittels einer Blende 5 verdeckt.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Behälter (1) für ein einspuriges Kraftfahrzeug mit einem ersten Behälterelement (2) und einem zweiten Behälterelement (3),
wobei das erste Behälterelement (2) an dem einspurigen Kraftfahrzeug befestigbar ist und das zweite Behälterelement (3) eine/n Öffnung/Deckel für ein Gepäckstück aufweist,
wobei das erste Behälterelement (2) und das zweite Behälterelement (3) derart einander überlappend angeordnet sind, dass das zweite Behälterelement (3) zwischen einer ersten eingeschobenen Position und einer zweiten ausgefahrenen Position an dem ersten Behälterelement (2) verschiebbar und ein Volumen des Behälters (1) veränderbar ist,
wobei an einer Innenseite (21) des ersten Behälterelements (2) und einer Innenseite (31) des zweiten Behälterelements (3) ein Spindelsystem (4) angeordnet ist,
wobei das zweite Behälterelement (3) mittels des Spindelsystems (4) stufenlos zwischen der ersten eingeschobenen Position und der zweiten ausgefahrenen Position verschiebbar und fixierbar ist,
wobei das Spindelsystem (4) zumindest einen endlosen Zahnriemen (41), zumindest eine Spindel (43), zumindest eine Spindelmutter (44), zumindest ein Zahnriemenrad (42) und ein Betätigungselement (45) für den Zahnriemen (41) aufweist,
**dadurch gekennzeichnet, dass** das Spindelsystem (4) zumindest drei endlose Zahnriemen (41) umfasst, welche im Wesentlichen u-förmig angeordnet sind, wobei an einem jeweiligen Übergang von einem Zahnriemen (41) zu einem weiteren Zahnriemen (41) sich jeweils die entsprechenden Zahnriemen (41) um ein Zahnriemenrad (42) erstrecken.

2. Behälter (1) gemäß Anspruch 1, wobei ein Ende der zumindest einen Spindel (43) an dem zweiten Behälterelement (3) fixiert ist und das andere Ende der Spindel (43) freistehend ist, wobei die zumindest eine Spindel (43) in der zumindest einen Spindelmutter (44) gelagert ist, wobei die zumindest eine Spindelmutter (44) rotierbar an dem ersten Behälterelement (2) gelagert ist und mit dem zumindest einen Zahnriemenrad (42) verbunden ist.

3. Behälter (1) gemäß Anspruch 1, wobei die zumindest eine Spindelmutter (44) an dem zweiten Behälterelement (3) fixiert ist, wobei die zumindest eine Spindel (43) in der zumindest einen Spindelmutter (44) gelagert ist, wobei ein Ende der zumindest einen Spindel (43) mit dem zumindest einen Zahnriemenrad (42) verbunden ist und das andere Ende der Spindel (43) freistehend ist, wobei die Spindel (44) rotierbar an dem ersten Behälterelement (2) gelagert ist.

4. Behälter (1) gemäß einem der vorhergehenden Ansprüche, wobei das Spindelsystem (4) eine Vielzahl von Spindeln (43) mit jeweils einer Spindelmutter (44) und einem Zahnriemenrad (42) aufweist.

5. Behälter (1) gemäß einem der vorhergehenden Ansprüche, wobei das Betätigungselement (45) ein Drehknauf mit einem Zahnriemenrad (42), ein von einem Motor angetriebenes Zahnriemenrad oder ein Hebel zum Verschieben des zumindest einen endlosen Zahnriemens (41) ist.

6. Behälter (1) gemäß Anspruch 5, wobei das Betätigungselement (45) einen Teleskopstab (451) umfasst, welcher den Drehknauf mit dem Zahnriemenrad (42) verbindet, wobei der Teleskopstab (451) in dem Zahnriemenrad (42) entlang einer Rotationsachse des Zahnriemenrads (42) verschiebbar gelagert ist.

7. Behälter (1) gemäß einem der vorhergehenden Ansprüche, wobei das Spindelsystem (4) mittels einer Blende (5) verdeckt ist.

## Claims

1. Container (1) for a single-track motor vehicle comprising a first container element (2) and a second container element (3),
wherein the first container element (2) is attachable to the single-track motor vehicle and the second container element (3) has an opening/lid for a piece of luggage,
wherein the first container element (2) and the second container element (3) are arranged overlapping one another such that the second container element (3) is displaceable on the first container element (2) between a first retracted position and a second extended position and a volume of the container (1) is variable,
wherein a spindle system (4) is arranged on an inner side (21) of the first container element (2) and an inner side (31) of the second container element (3),
wherein the second container element (3) is continuously displaceable and fixable between the first retracted position and the second extended position by means of the spindle system (4),
wherein the spindle system (4) comprises at least one endless toothed belt (41), at least one spindle (43), at least one spindle nut (44), at least one toothed belt pulley (42) and an actuating element (45) for the toothed belt (41),
**characterized in that** the spindle system (4) comprises at least three endless toothed belts (41) which are arranged substantially in a U-shape, wherein at a respective transition from one toothed belt (41) to another toothed belt (41) the respective toothed belts (41) each extend around a toothed belt pulley (42).

2. Container (1) according to claim 1, wherein one end of the at least one spindle (43) is fixed to the second container element (3) and the other end of the spindle (43) is free-standing, wherein the at least one spindle (43) is mounted in the at least one spindle nut (44), wherein the at least one spindle nut (44) is rotatably mounted on the first container element (2) and is connected to the at least one toothed belt pulley (42).

3. Container (1) according to claim 1, wherein the at least one spindle nut (44) is fixed to the second container element (3), wherein the at least one spindle (43) is mounted in the at least one spindle nut (44), wherein one end of the at least one spindle (43) is connected to the at least one toothed belt pulley (42) and the other end of the spindle (43) is free-standing, wherein the spindle (44) is rotatably mounted on the first container element (2).

4. Container (1) according to any one of the preceding claims, wherein the spindle system (4) comprises a plurality of spindles (43) each having a spindle nut (44) and a toothed belt pulley (42).

5. Container (1) according to any one of the preceding claims, wherein the actuating element (45) is a rotary knob with a toothed belt pulley (42), a motor-driven toothed belt pulley, or a lever for displacing the at least one endless toothed belt (41).

6. Container (1) according to claim 5, wherein the actuating element (45) comprises a telescopic rod (451) which connects the rotary knob to the toothed belt pulley (42), wherein the telescopic rod (451) is displaceably mounted in the toothed belt pulley (42) along an axis of rotation of the toothed belt pulley (42).

7. Container (1) according to any one of the preceding claims, wherein the spindle system (4) is covered by means of a panel (5).

## Revendications

1. Conteneur (1) pour un véhicule à moteur à voie unique comprenant un premier élément de conteneur (2) et un deuxième élément de conteneur (3),
dans lequel le premier élément de conteneur (2) peut être fixé au véhicule à moteur à voie unique et le deuxième élément de conteneur (3) présente une ouverture/un couvercle pour un bagage,
dans lequel le premier élément de conteneur (2) et le deuxième élément de conteneur (3) sont disposés de manière à se chevaucher de telle sorte que le deuxième élément de conteneur (3) est déplaçable sur le premier élément de conteneur (2) entre une première position rétractée et une deuxième position étendue et un volume du conteneur (1) est variable,
dans lequel un système à broche (4) est disposé sur un côté intérieur (21) du premier élément de conteneur (2) et un côté intérieur (31) du deuxième élément de conteneur (3),
dans lequel le deuxième élément de conteneur (3) est déplaçable et fixable en continu entre la première position rétractée et la deuxième position étendue au moyen du système à broche (4),
dans lequel le système à broche (4) comprend au moins une courroie crantée sans fin (41), au moins une broche (43), au moins un écrou de broche (44), au moins une poulie de courroie crantée (42) et un élément d'actionnement (45) pour la courroie crantée (41),
**caractérisé en ce que** le système à broche (4) comprend au moins trois courroies crantées sans fin (41) qui sont disposées sensiblement en forme de U, dans lequel à chaque transition d'une courroie crantée (41) à une autre courroie crantée (41), les courroies crantées (41) respectives s'étendent chacune autour d'une poulie de courroie crantée (42).

2. Conteneur (1) selon la revendication 1, dans lequel une extrémité de la au moins une broche (43) est fixée au deuxième élément de conteneur (3) et l'autre extrémité de la broche (43) est autoportante, dans lequel la au moins une broche (43) est montée dans le au moins un écrou de broche (44), dans lequel le au moins un écrou de broche (44) est monté de manière rotative sur le premier élément de conteneur (2) et est relié à la au moins une poulie de courroie crantée (42).

3. Conteneur (1) selon la revendication 1, dans lequel le au moins un écrou de broche (44) est fixé au deuxième élément de conteneur (3), dans lequel la au moins une broche (43) est montée dans le au moins un écrou de broche (44), dans lequel une extrémité de la au moins une broche (43) est reliée à la au moins une poulie de courroie crantée (42) et l'autre extrémité de la broche (43) est autoportante, dans lequel la broche (44) est montée de manière rotative sur le premier élément de conteneur (2).

4. Conteneur (1) selon l'une quelconque des revendications précédentes, dans lequel le système à broche (4) comprend une pluralité de broches (43) ayant chacune un écrou de broche (44) et une poulie de courroie crantée (42).

5. Conteneur (1) selon l'une quelconque des revendications précédentes, dans lequel l'élément d'actionnement (45) est un bouton rotatif avec une poulie de courroie crantée (42), une poulie de courroie crantée entraînée par un moteur, ou un levier pour déplacer la au moins une courroie crantée sans fin (41).

6. Conteneur (1) selon la revendication 5, dans lequel l'élément d'actionnement (45) comprend une tige télescopique (451) qui relie le bouton rotatif à la poulie de courroie crantée (42), dans lequel la tige télescopique (451) est montée de manière déplaçable dans la poulie de courroie crantée (42) le long d'un axe de rotation de la poulie de courroie crantée (42).

7. Conteneur (1) selon l'une quelconque des revendications précédentes, dans lequel le système à broche (4) est recouvert au moyen d'un panneau (5).
